# EUROPEAN PATENT APPLICATION

(11) **EP 4 632 880 A1**
(43) Date of publication of application: **15.10.2025**
(21) Application number: 24856675.4
(22) Date of filing: 26.07.2024
(51) Int. Cl.: H01M 10/658, H01M 50/291, H01M 50/293, H01M 50/211, H01M 50/249

(54) **BATTERY PACK AND VEHICLE COMPRISING SAME**

(30) Priority: 22.08.2023 KR 20230110014
(71) Applicant: LG Energy Solution, Ltd., Seoul 07335 (KR)
(72) Inventor: PARK, Ju-Hun, Daejeon 34122 (KR); KIM, Soo-Youl, Daejeon 34122 (KR)
(74) Representative: Plasseraud IP
(86) International application number: PCT/KR2024/010971
(87) International publication number: WO 2025/042062

(57) **Abstract**

The present disclosure relates to a battery pack including: a plurality of battery cells; a pack case including a bottom pack frame on which the plurality of battery cells are seated and a cross-member provided on the bottom pack frame and configured to partition the plurality of battery cells; and an insulating component provided between the bottom pack frame and the cross-member and having at least one groove formed therein.

## Description

### TECHNICAL FIELD

The present disclosure relates to a battery pack and a vehicle including the same.

This application is based on and claims priority from Korean Patent Application No. 10-2023-0110014, filed on August 22, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or pack may be set in various ways depending on the required output voltage or charge/discharge capacity.

A common method for configuring a battery pack by connecting a plurality of battery cells in series/parallel is to preferentially configure a battery module including at least one battery cell and then add other elements using the at least one battery module, thereby configuring a battery pack or battery rack. In addition, recently, a cell-to-pack-type battery pack has been manufactured in which a plurality of battery cells are directly stored in a pack housing or the like, instead of making a module of the battery cells.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack, high-temperature gas or flame emitted from the battery cells therein may spread to adjacent battery modules, causing a chain reaction of explosions in the battery modules, which is very dangerous.

Furthermore, since the pack case is made of a metal material with higher thermal conductivity, such as aluminum, if a thermal event occurs in the battery module, a cross-member of the pack case may receive heat from the sides of the battery module and the bottom surface of the pack case, so that the temperature thereof may rapidly increase. Accordingly, the heat is likely to spread to adjacent battery modules, causing thermal runaway.

Therefore, it is necessary to develop a structure, in a battery pack in which battery modules are densely stored, capable of minimizing thermal conduction to adjacent battery modules even if a thermal event occurs in some battery modules, thereby suppressing and delaying thermal propagation between the battery modules.

In particular, there is a need to develop a structure capable of blocking heat transfer from the bottom surface of the pack case to the cross-member, thereby suppressing a sharp increase in temperature of the cross-member.

### DISCLOSURE

### Technical Problem

The present disclosure is designed to solve the problems of the related art, and therefore the present disclosure is directed to providing a battery pack capable of minimizing thermal conduction and thermal radiation to adjacent battery modules when thermal runaway occurs in a battery module to effectively prevent or delay thermal runaway propagation between the battery modules.

Therefore, the present disclosure is also to provide a battery pack with improved safety and reliability.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case including a bottom pack frame on which the plurality of battery cells are seated and a cross-member provided on the bottom pack frame and configured to partition the plurality of battery cells; and an insulating component provided between the bottom pack frame and the cross-member and having at least one groove formed therein.

The insulating component may include a first surface configured to come into surface contact with a lower surface of the cross-member, and a second surface, which is an opposite surface of the first surface, configured to come into surface contact with an upper surface of the bottom pack frame, and the groove may be formed on the first surface so that a contact area between the bottom pack frame and the cross-member may be reduced.

A width of the insulating component may be configured to be greater than a thickness of the cross-member.

The insulating component may include a material having lower thermal conductivity than the cross-member.

The insulating component may be made of a material having fire resistance.

The lower surface of the cross-member may be made of a material having lower thermal conductivity than aluminum.

The bottom pack frame may have an insertion groove formed at a position facing the cross-member, and the insulating component may be configured to be inserted into the insertion groove and seal the insertion groove.

The insulating component may have a plurality of grooves formed therein, and the plurality of grooves may be arranged to be spaced apart from each other in a direction in which the cross-member extends.

The insulating component may include a rib configured to form the groove and support the cross-member.

The rib may be configured to be in surface contact with the lower surface of the cross-member.

The rib may be configured to extend in a direction in which the cross-member extends.

The insulating component may be produced by extrusion such that the rib is configured integrally with the insulating component.

The battery pack according to an embodiment of the present disclosure may further include a plurality of module cases configured to group at least some of the plurality of battery cells and have a venting hole formed on at least one side.

The plurality of module cases may be disposed in a plurality of rows, and the cross-member may include a cross-beam provided between the plurality of module cases disposed along adjacent rows, and a plurality of partitions extending from the cross-beam and disposed to be spaced apart from each other in a direction in which the cross-beam extends.

In addition, the present disclosure also provides a vehicle including a battery pack according to the present disclosure.

### Advantageous Effects

According to one aspect of the present disclosure, when thermal runaway occurs in a battery module, heat conduction to adjacent battery modules may be minimized, thereby effectively preventing or delaying the propagation of thermal runaway between the battery modules. As a result, the safety and reliability of the battery module may be guaranteed.

In addition, according to another aspect of the present disclosure, when thermal runaway occurs in a battery module, the temperature of the cross-member that partitions the battery module may be suppressed from rapidly increasing.

In addition, according to another aspect of the present disclosure, an event due to thermal runaway of a device equipped with a battery pack, such as a fire or explosion, may be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery pack according to an embodiment of the present disclosure.
FIG. 3 is a partially cross-sectional view taken along line I-I' in FIG. 1.
FIG. 4 illustrates a comparative example showing a direction of heat transfer in the case where an insulating component included in a battery pack according to an embodiment of the present disclosure is not provided.
FIG. 5 is a drawing illustrating a direction of heat transfer in the case where an insulating component in a battery pack according to an embodiment of the present disclosure is provided.
FIG. 6 is an enlarged view of part A in FIG. 3.
FIG. 7 is a cross-sectional perspective view of a primary part of a battery pack according to an embodiment of the present disclosure.
FIG. 8 is a cross-sectional view taken along line II-II' in FIG. 1.
FIG. 9 is a perspective view of an insulating component included in a battery pack according to an embodiment of the present disclosure.
FIG. 10 is a cross-sectional view of a primary part of a battery pack according to another embodiment of the present disclosure.
FIG. 11 is a cross-sectional perspective view of a primary part of a battery pack according to another embodiment of the present disclosure.
FIG. 12 is a perspective view of an insulating component included in a battery pack according to another embodiment of the present disclosure.
FIG. 13 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Redundant descriptions of elements that are substantially identical or similar to each other between the embodiments will be omitted, and the description will be made based on differences thereof.

Meanwhile, although terms indicating directions such as upward, downward, left, right, front, and back are used in this specification, it is obvious to those skilled in the art that these terms are only for convenience of explanation and may vary depending on the location of the target object or the location of the observer.

For example, in the embodiment of the present disclosure, the X-axis direction shown in the drawing may indicate the left-right direction, the Y-axis direction may indicate the front-back direction perpendicular to the X-axis direction on the horizontal plane (X-Y plane), and the Z-axis direction may indicate the upward-downward direction (vertical direction) perpendicular to both the X-axis direction and the Y-axis direction

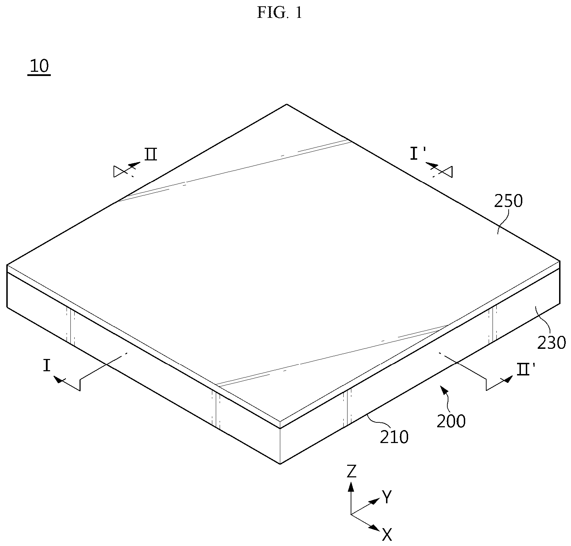

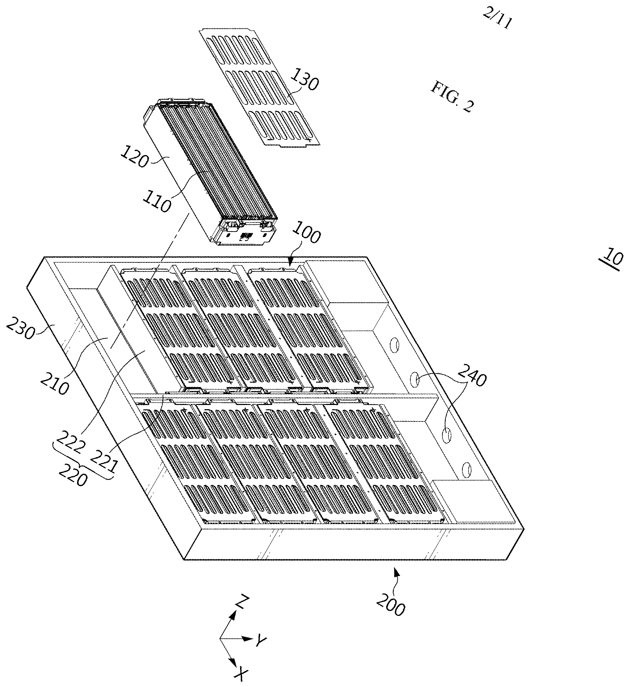

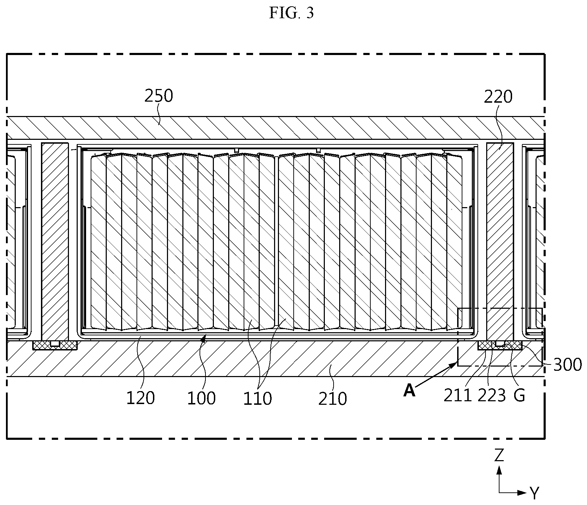

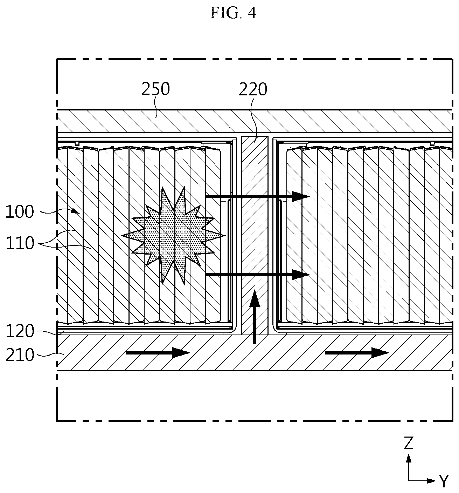

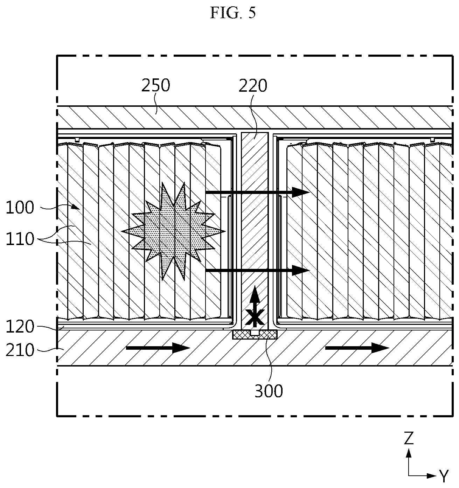

FIG. 1 is a perspective view of a battery pack according to an embodiment of the present disclosure, and FIG. 2 is an exploded perspective view of a battery pack according to an embodiment of the present disclosure. In addition, FIG. 3 is a partially cross-sectional view taken along line I-I' in FIG. 1. FIG. 4 illustrates a comparative example showing a direction of heat transfer in the case where an insulating component included in a battery pack according to an embodiment of the present disclosure is not provided. FIG. 5 is a drawing illustrating a direction of heat transfer in the case where an insulating component in a battery pack according to an embodiment of the present disclosure is provided.

First, referring to FIGS. 1 to 3, a battery pack 10 according to an embodiment of the present disclosure includes a battery cell 110, a pack case 200, and an insulating component 300.

Referring to FIG. 1, the battery pack 10 according to the present disclosure may include a pack case 200. The pack case 200 forms the exterior of the battery pack 10. The pack case 200 may have predetermined lengths in the X-axis, Y-axis, and Z-axis directions, and may have an overall shape of approximately a cuboid. The pack case 200 may include a bottom pack frame 210, a side frame 230, and a pack lid 250.

Referring further to FIG. 2, the battery pack 10 according to the present disclosure may include at least one battery cell, preferably a plurality of battery cells 110. The battery cells 110 may be accommodated in the pack case 200 in FIG. 1. The plurality of battery cells 110 may be electrically connected to each other.

The battery cell 110 may be provided in a pouch-type. A cell case of the pouch-type battery cell 110 may be configured in a pouch in which an aluminum metal layer is interposed between polymer layers.

In addition, although not shown in the drawing, the pouch-type battery cell 110 may include an electrode assembly, a cell case that accommodates the electrode assembly, and an electrode lead that is connected to the electrode assembly and extends to the outside of the cell case to function as an electrode terminal. The cell case may include a storage portion that accommodates the electrode assembly and a sealing portion that seals the periphery of the storage portion.

In this case, the plurality of battery cells 110 may be arranged side by side in the front-back direction (Y-axis direction) while standing in the vertical direction (Z-axis direction), as shown in FIG. 2. In this case, each battery cell 110 may have sealing portions directed in the left-right direction (X-axis direction) and the upward-downward direction (Z-axis direction), and a storage portion directed in the front-back direction (Y-axis direction).

Meanwhile, the present disclosure is not limited to a specific type or shape of the battery cell 110, and various battery cells 110 known at the time of filing the present disclosure may be applied to configure the battery pack 10 of the present disclosure. Although the pouch-type secondary battery, as shown in the drawing, with high energy density and easy to stack will be described in the present embodiment, it is obvious that a cylindrical or prismatic secondary battery can be applied as the battery cell 110.

Meanwhile, the pack case 200 may be configured to accommodate a plurality of battery cells 110. That is, the pack case 200 may provide an accommodation space so as to accommodate a plurality of battery cells 110. The pack case 200 may be made of a material capable of securing mechanical strength, for example, metal such as SUS or fiber-reinforced plastic, or may include such a material in order to safely protect the battery cells 110 accommodated therein.

As illustrated in FIG. 2, the pack case 200 may further include a cross-member 220 in addition to the bottom pack frame 210, the side frame 230, and the pack lid 250 described with reference to FIG. 1.

The bottom pack frame 210 may be configured to have a plurality of battery cells 110 seated thereon. The bottom pack frame 210 may form the lower surface of the pack case 200 and may be configured in a square plate. In addition, the bottom pack frame 210 may have a flat upper surface so that the plurality of battery cells 110 may be stably seated thereon.

In this case, the cross-member 220 may be configured to partition the plurality of battery cells 110. A plurality of cross-members 220 may be provided. The cross-members 220 may be provided on the bottom pack frame 210 so as to be coupled to the bottom pack frame 210. The cross-members 220 may be bolted or welded to the bottom pack frame 210.

More specifically, the cross-members 220 may include a cross-beam 221 and a partition 222. The cross-beam 221 may be provided between a plurality of battery cells 110 arranged along adjacent rows. For example, referring to FIG. 2, the cross-beam 221 may be provided between battery modules 100 arranged in two rows in the left-right direction (X-axis direction) so as to extend in the front-back direction (Y-axis direction).

The partition 222 may be configured to extend from the cross-beam 221. A plurality of partitions 222 may be provided. The partitions 222 may be arranged to be spaced apart from each other in the direction in which the cross-beam 221 extends, that is, in the front-back direction (Y-axis direction). Accordingly, the partition 222 may be provided to extend long in the left-right direction (X-axis direction).

According to the above-described implemented configuration of the present disclosure, the plurality of battery cells 110 may be divided by the cross-members 220. In addition, since the cross-members 220 are disposed horizontally in the pack case 200, if external pressure is applied, such as when the pack case 200 is bent up and down, the bending force may be dispersed along the cross-members 220. As a result, it is possible to prevent the pack case 200 from being broken due to stress concentrated on a certain part, thereby securing the rigidity of the battery pack 10.

The side frame 230 may extend upward from the respective edges of the bottom pack frame 210. The side frame 230 may have a plurality of unit walls to surround the plurality of battery cells 110. More specifically, the side frame 230 may include a rear wall located at the end of the bottom pack frame 210 in the +Y-axis direction, a right wall located at the end thereof in the +X-axis direction, a front wall located at the end thereof in the -Y-axis direction, and a left wall located at the end thereof in the -X-axis direction, thereby constituting the side surfaces of the pack case 200.

The pack lid 250 may be coupled to the top of the side frame 230 to form the upper surface of the pack case 200. In this case, the pack lid 250 may be provided to be spaced a predetermined distance apart from the top of the cross-members 220.

In addition, referring to FIG. 2, the pack case 200 may be provided with a venting portion 240. The venting portion 240 may be provided on the side of the pack case 200, that is, on the side frame 230. The venting portion 240 may be configured to discharge gas generated from the battery cell 110 stored inside to the outside of the pack case 200. Specifically, referring further to FIG. 3, there is a space between the pack lid 250 and the cross-members 220. Therefore, the gas discharged upward through a venting hole 130 of the battery module 100 may move to the space between the pack lid 250 and the cross-members 220. The gas may be discharged to the outside of the pack case 200 through the venting portion 240 provided in the side frame 230.

As shown in FIG. 3, the battery pack 10 of the present disclosure includes an insulating component 300. The insulating component 300 may be made of a material having lower thermal conductivity than the pack case 200, for example, the bottom pack frame 210 and/or the cross-member 220. For example, the insulating component 300 may be made of a material such as polyurethane or silicone. Alternatively, the insulating component 300 may be made of a material having fire resistance. For example, the insulating component 300 may be configured as a material such as flame-retardant plastic or mica.

The insulating component 300 may be provided between the bottom pack frame 210 and the cross-member 220. That is, the insulating component 300 may be provided at a portion where the cross-member 220 is in contact with the bottom pack frame 210. For example, the insulating component 300 may be provided at the bottoms of the plurality of cross-beams 221 and partitions 222, respectively.

The pack case 200 may be made of a metal material such as aluminum with high thermal conductivity. Since the metal material has high thermal conductivity, heat due to high-temperature gas or flame may transfer between the pack case 200 structures.

Accordingly, if the insulating component 300 is not provided between the bottom pack frame 210 and the cross-member 220 as shown in FIG. 4, when a thermal event occurs in a battery cell 110, heat may directly transfer to the cross-member 220 through the side surfaces of the battery module 100 (the direction of heat transfer is indicated by arrows crossing the cross-member 220 from the battery cell 110 in the drawing). In addition, the heat may transfer to the bottom pack frame 210 through the lower portion of the battery cell 110 (the direction of heat transfer is indicated by arrows in the Y-axis direction along the bottom pack frame 210 in the drawing), and the heat transferring to the bottom pack frame 210 may transfer to the cross-member 220 (the direction of heat transfer is indicated by an arrow in the Z-axis direction from the bottom pack frame 210 to the cross-member 220 in the drawing). As a result, the cross-member 220 receives heat from the sides of the battery module 100 and/or the bottom pack frame 210, so that the temperature rises more quickly.

On the other hand, as shown in FIG. 5, since the insulating component 300 is provided between the bottom pack frame 210 and the cross-member 220 in the battery pack 10 of the present disclosure, the cross-member 220 and the bottom pack frame 210 may have an interface with increased thermal contact resistance. Accordingly, the heat transferring from the battery cell 110 where the thermal event occurred to the bottom pack frame 210 may be delayed from transferring to the cross-member 220 (the heat transfers as indicated by the arrow in the Z-axis direction from the bottom pack frame 210 to the cross-member 220 in FIG. 4, whereas the heat transfer in such a direction is delayed in FIG. 5 (see the X marked on the arrow)).

Consequently, according to the above-implemented configuration of the present disclosure, the interface between the bottom pack frame 210 and the cross-member 220 may be modified to suppress the rapid increase in the temperature of the cross-member 220. Therefore, it is possible to prevent heat generated due to a thermal event in a battery cell 110 from transferring to another battery cell 110, which faces the battery cell 110 where the event occurred across the cross-member 220, through the lower portion of the pack case 200 and then the cross-member 220.

In addition, according to the above-implemented configuration of the present disclosure, since the insulating component 300 is provided, the area where the bottom pack frame 210 and the cross-member 220 are in direct contact with each other may be reduced, thereby reducing the area where heat is exchanged between the two components. Accordingly, as shown in FIG. 5, the heat transferring from the battery cell 110 where the thermal event occurred to the bottom pack frame 210 may be suppressed from being thermally conducted and thermally radiated to the cross-member 220. Therefore, according to the above-described implemented configuration of the present disclosure, the thermal runaway propagation between the battery cells 110 may be effectively prevented or delayed, thereby ensuring the safety and reliability of the battery pack 10.

Meanwhile, the battery pack 10 according to an embodiment of the present disclosure may further include a module case 120. The module case 120 may be configured to have an inner space formed therein, so that at least some of the plurality of battery cells 110 may be accommodated in the inner space. In particular, the module case 120 may be a boundary that groups the plurality of battery cells 110 into several battery cells 110 and physically confines the inner space of each battery cell 110.

The module case 120 may be made of a metal material having rigidity and heat resistance in order to physically or chemically protect the accommodated battery cells 110.

That is, the battery pack 10 according to the present disclosure may include a plurality of battery modules 100, and a plurality of battery cells 110 included in the battery pack 10 may be divided and received in the plurality of battery modules 100.

The plurality of battery modules 100 may be arranged adjacent to each other in the front-back direction and/or left-right direction along a plurality of rows. For example, as illustrated in FIG. 2, the plurality of battery modules 100 may be arranged in two rows in the left-right direction (X-axis direction) and in four rows in the front-back direction (Y-axis direction).

In addition, although not shown in the drawing, the battery module 100 may include a bus-bar assembly and/or a module terminal that is electrically connected to the plurality of battery cells 110 accommodated inside the module case 120.

Meanwhile, at least one venting hole 130 may be formed in the module case 120. Preferably, a plurality of venting holes 130 may be formed. The venting holes 130 may be configured to discharge venting gas generated from the battery cell 110 to the outside of the module case 120. The venting holes 130 may be formed on one side of the module case 120, so that directional venting in one direction may be possible. For example, the venting holes 130 may be formed on the upper surface of the module case 120. In the example shown in FIG. 2, the venting holes 130 may be formed on the top plate 130. According to the above-described implemented configuration of the present disclosure, the remaining portion of the module case 120, excluding the venting holes 130, may be sealed, so that gas or flame may be discharged in a straight line toward the venting holes 130.

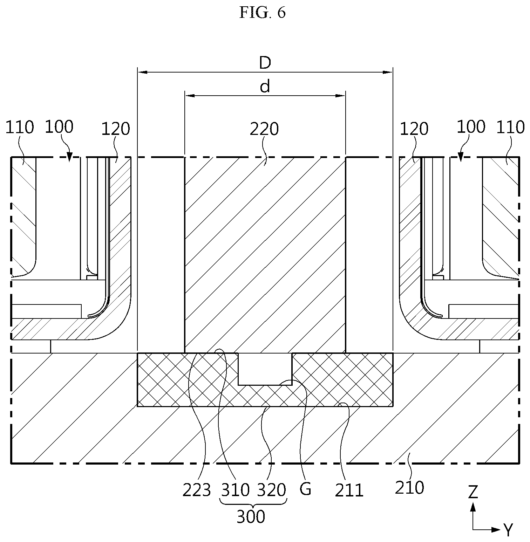

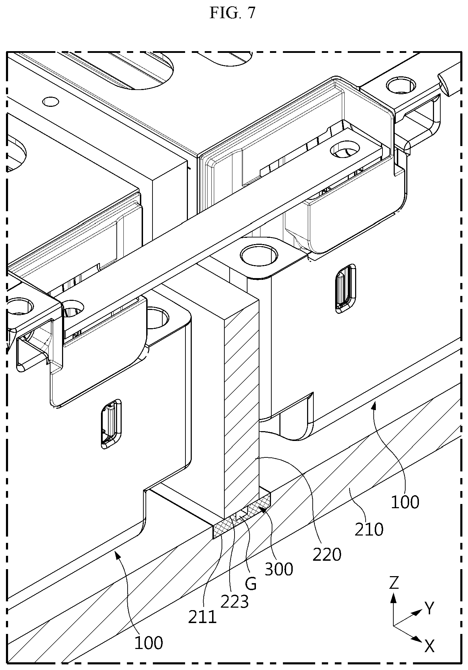

FIG. 6 is an enlarged view of part A in FIG. 3, and FIG. 7 is a cross-sectional perspective view of a primary part of a battery pack according to an embodiment of the present disclosure. The insulating component 300 will be described in more detail with reference to FIG. 3, FIG. 6, and FIG. 7.

Referring to FIG. 3, FIG. 6, and FIG. 7, at least one groove G may be formed in the insulating component 300. Specifically, referring to FIG. 6, the insulating component 300 may include a first surface 310 that comes into surface contact with the lower surface 223 of the cross-member 220, and a second surface 320 that comes into surface contact with the upper surface of the bottom pack frame 210, which is the opposite surface of the first surface 310. The cross-member 220 may be welded to a portion of the first surface 310 of the insulating component 300, excluding the groove G.

Even if the insulating component 300 is made of a material having lower thermal conductivity than the bottom pack frame 210 and/or the cross-member 220, it may have little thermal conductivity, so there is a possibility of heat transfer to the cross-member 220 through the insulating component 300. Therefore, as in the above-implemented configuration of the present disclosure, a groove G may be formed on one side of the insulating component 300 that comes into contact with the lower surface 223 of the cross-member 220, thereby reducing the direct contact area between the insulating component 300 and the cross-member 220. Therefore, it is possible to further lower the possibility that heat transfers from the bottom pack frame 210 to the cross-member 220 through the insulating component 300.

In addition, the lower surface 223 of the cross-member 220 may cover the top of the groove G to form an air layer inside the groove G. Air in a stationary state becomes a material with high resistance to heat conduction. Although air also transfers heat through convection, the groove G may be too small to generate convection in the air layer formed inside the groove G. Therefore, if the groove G is formed in the insulating component 300, stationary air may be confined inside the groove G to further exert insulation effect, thereby further delaying heat transfer from the bottom pack frame 210 to the cross-member 220.

The lower surface 223 of the cross-member 220 may be formed of a material with lower thermal conductivity than aluminum. That is, a portion where the cross-member 220 is in contact with the insulating component 300 may be formed of a material with lower thermal conductivity than the cross-member 220. According to the above-implemented configuration of the present disclosure, in addition to the insulating component 300, heat transfer from the bottom pack frame 210 may be blocked, thereby more effectively suppressing the temperature of the cross-member 220 from rapidly rising.

Meanwhile, referring to FIG. 6 and FIG. 7, the bottom pack frame 210 may have an insertion groove 211 formed therein. The insertion groove 211 may be formed at a position where the bottom pack frame 210 faces the cross-member 220. The insertion groove 211 may be configured to be recessed inward from the surface of the bottom pack frame 210 so as to correspond to the size of the insulating component 300. In this case, the insulating component 300 may be configured to be inserted into the insertion groove 211 and seal the inner space of the insertion groove 211. For example, the insulating component 300 may be configured as a sealing gasket to be forcibly fitted into the insertion groove 211 to seal the insertion groove 211. In this case, the insulating component 300 may be configured as an elastic material such as silicone.

According to the above-described implemented configuration of the present disclosure, the insulating component 300 may prevent high-temperature gas or flame from flowing into the groove G provided at the bottom of the cross-member 220. As a result, high-temperature gas or flame may be prevented from flowing to the adjacent battery module 100 through the bottom of the cross-member 220.

Referring to FIG. 6, the width D of the insulating component 300 in the front-back direction (Y-axis direction) may be configured to be greater than the thickness d of the cross-member 220. In addition, the width of the groove G in the front-back direction (Y-axis direction) may be configured to be smaller than the thickness d of the cross-member 220.

According to the above-implemented configuration of the present disclosure, the insulating component 300 may prevent high-temperature gas or flame from flowing into the space from both sides of the cross-member 220. As a result, high-temperature gas or flame may be prevented from flowing to the adjacent battery module 100 through the bottom of the cross-member 220.

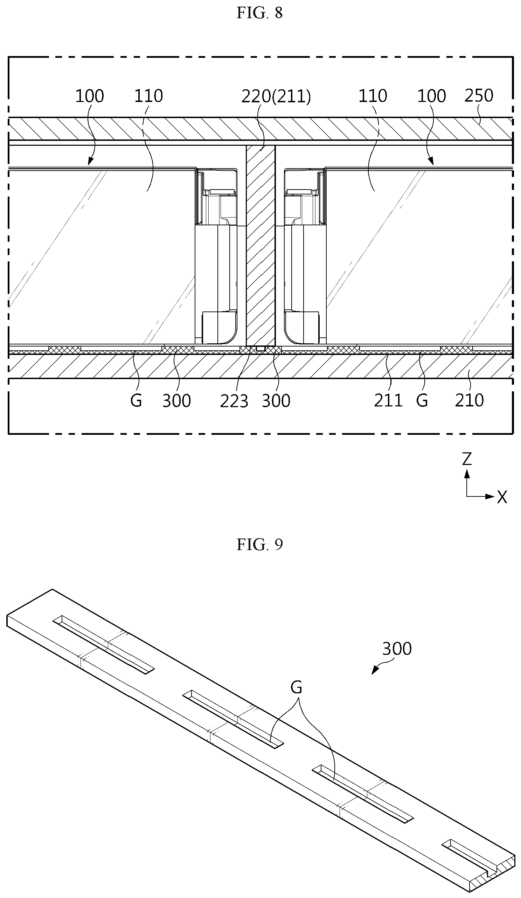

FIG. 8 is a cross-sectional view taken along line II-II' in FIG. 1, and FIG. 9 is a perspective view of an insulating component included in a battery pack according to an embodiment of the present disclosure.

Referring to FIG. 8 and FIG. 9, a plurality of grooves G may be formed in the insulating component 300. The plurality of grooves G may be arranged to be spaced apart from each other in the direction in which the cross-member 220 extends. For example, as illustrated in FIG. 8, a plurality of grooves G formed in the insulating component 300 provided at the bottom of the partition 222 may be disposed in the direction (X-axis direction) in which the partition 222 extends. In addition, a plurality of grooves G formed in the insulating component 300 provided at the bottom of the cross-beam 221 may be disposed in the direction (Y-axis direction) in which the cross-beam 221 extends.

According to the above-described implemented configuration of the present disclosure, since a plurality of grooves G are provided in the insulating component 300, a plurality of air layers may be formed, so that the area in which the cross-member 220 and the bottom pack frame 210 are in direct contact with each other may be reduced, and so that the insulation effect by the air layers may be further increased. Furthermore, the area of the insulating component 300 supporting the cross-member 220 may be secured, thereby improving stability.

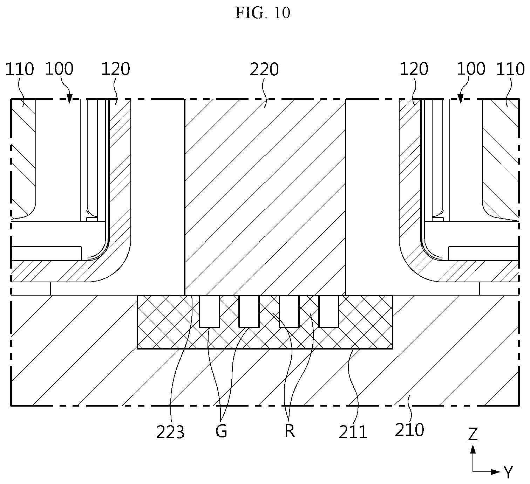

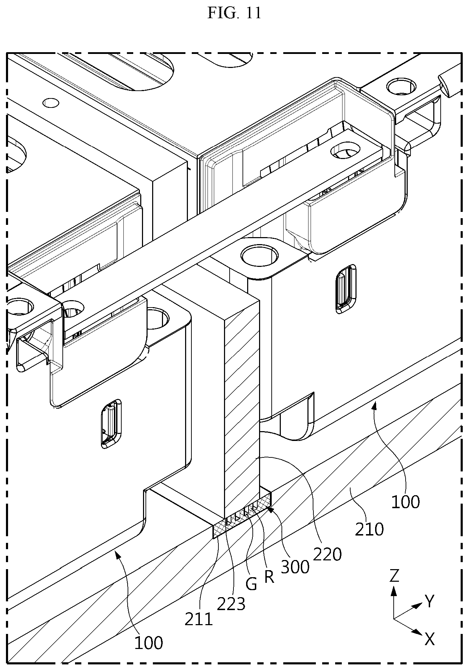

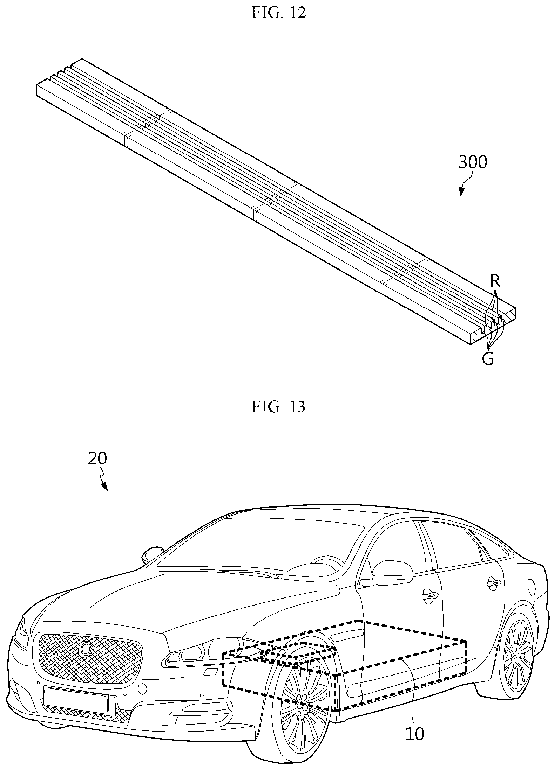

FIG. 10 is a cross-sectional view of a primary part of a battery pack according to another embodiment of the present disclosure, FIG. 11 is a cross-sectional perspective view of a primary part of a battery pack according to another embodiment of the present disclosure, and FIG. 12 is a perspective view of an insulating component included in a battery pack according to another embodiment of the present disclosure.

Referring to FIGS. 10 to 12, an insulating component 300 included in a battery pack 10 according to another embodiment of the present disclosure may include a rib R. The rib R may be configured to form a groove G. Specifically, a plurality of ribs R may be provided to be spaced apart from each other in one direction. In this case, a plurality of grooves G may be formed between the ribs R.

Referring to FIG. 12, the rib R may be configured to extend in the direction in which the insulating component 300 extends. That is, the rib R may be configured to extend in the direction in which the cross-member 220 extends. The length of the rib R may be configured to be the same as the length of the insulating component 300. Accordingly, the length of the groove G may also be configured to be the same as the length of the insulating component 300. According to the above-implemented configuration of the present disclosure, since the cross-sectional area of the groove G increases, the area in which the insulating component 300 comes into contact with the cross-member 220 may be further reduced, thereby reducing the probability of heat transfer between the components.

In this case, the insulating component 300 may be produced by extrusion such that the rib R is configured integrally with the insulating component 300. As the insulating component 300 is extruded, the rib R may be formed to extend in the extrusion direction. According to the above-implemented configuration of the present disclosure, a process of coupling the rib R to the insulating component 300 is unnecessary, so that cost and time may be reduced, thereby improving productivity.

In addition, referring to FIGS. 10 and 11, the rib R may be configured to support the cross-member 220. Specifically, the rib R may be provided to be in surface contact with the lower surface 223 of the cross-member 220. Therefore, according to the above-implemented configuration of the present disclosure, the support force between the insulating component 300 and the cross-member 220 may be improved, so that the cross-member 220 may be more stably coupled to the insulating component 300.

FIG. 13 is a schematically perspective view of a vehicle including a battery pack according to an embodiment of the present disclosure.

Meanwhile, referring to FIG. 13, the present disclosure may provide a vehicle 20 including the battery pack 10 according to the above-described embodiments. That is, the battery pack 10 according to the present disclosure may be applied to a vehicle such as an electric vehicle or a hybrid vehicle. The vehicle 20 includes a four-wheel vehicle and a two-wheel vehicle. The vehicle 20 drives by receiving power from the battery pack 10 according to an embodiment of the present disclosure. For example, the battery pack 10 may be installed in a body frame under a seat of the vehicle or in a trunk space.

For reference, the battery pack 10 according to the present disclosure may be applied to an ESS (Energy Storage System) or various electric devices, in addition to the vehicle.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery cells;
a pack case comprising a bottom pack frame on which the plurality of battery cells are seated and a cross-member provided on the bottom pack frame and configured to partition the plurality of battery cells; and
an insulating component provided between the bottom pack frame and the cross-member and having at least one groove formed therein.

2. The battery pack according to claim 1,
wherein the insulating component comprises
a first surface configured to come into surface contact with a lower surface of the cross-member, and
a second surface, which is an opposite surface of the first surface, configured to come into surface contact with an upper surface of the bottom pack frame, and
wherein the groove is formed on the first surface so that a contact area between the bottom pack frame and the cross-member is reduced.

3. The battery pack according to claim 1,
wherein the insulating component comprises a material having lower thermal conductivity than the cross-member.

4. The battery pack according to claim 1,
wherein the insulating component is made of a material having fire resistance.

5. The battery pack according to claim 1,
wherein the lower surface of the cross-member is made of a material having lower thermal conductivity than aluminum.

6. The battery pack according to claim 1,
wherein the bottom pack frame has an insertion groove formed at a position facing the cross-member, and
wherein the insulating component is configured to be inserted into the insertion groove and seal the insertion groove.

7. The battery pack according to claim 1,
wherein a width of the insulating component is configured to be greater than a thickness of the cross-member.

8. The battery pack according to claim 1,
wherein the insulating component has a plurality of grooves formed therein, and
wherein the plurality of grooves are arranged to be spaced apart from each other in a direction in which the cross-member extends.

9. The battery pack according to claim 1,
wherein the insulating component comprises a rib configured to form the groove and support the cross-member.

10. The battery pack according to claim 9,
wherein the rib is configured to be in surface contact with the lower surface of the cross-member.

11. The battery pack according to claim 9,
wherein the rib is configured to extend in a direction in which the cross-member extends.

12. The battery pack according to claim 11,
wherein the insulating component is produced by extrusion such that the rib is configured integrally with the insulating component.

13. The battery pack according to claim 1,
further comprising a plurality of module cases configured to group at least some of the plurality of battery cells and have a venting hole formed on at least one side.

14. The battery pack according to claim 13,
wherein the plurality of module cases are disposed in a plurality of rows, and
wherein the cross-member comprises
a cross-beam provided between the plurality of module cases disposed along adjacent rows, and
a plurality of partitions extending from the cross-beam and disposed to be spaced apart from each other in a direction in which the cross-beam extends.

15. A vehicle comprising a battery pack according to any one of claims 1 to 14.
